# EUROPEAN PATENT SPECIFICATION

(11) **EP 3 140 449 B1**
(45) Date of publication and mention of the grant of the patent: **05.02.2020**
(21) Application number: 14722659.1
(22) Date of filing: 07.05.2014
(51) Int. Cl.: D06F 35/00, C02F 1/32, D06F 58/20, A47L 15/42, D06F 39/08, C02F 103/00

(54) **LAUNDRY WASHING MACHINE WITH AN UV SOURCE**
WASCHMASCHINE MIT UV-QUELLE
LAVE-LINGE DOTÉ D'UNE SOURCE D'UV

(43) Date of publication of application: 15.03.2017
(73) Proprietor: Electrolux Appliances Aktiebolag, 105 45 Stockholm (SE)
(72) Inventor: DEL POS, Maurizio, I-33080 Porcia (PN) (IT); FAVARO, Daniele, I-33080 Porcia (PN) (IT)
(74) Representative: Electrolux Group Patents
(86) International application number: PCT/EP2014/059299
(87) International publication number: WO 2015/169348

(56) References cited:
- EP-A1- 2 221 411
- DE-A1-102010 038 692
- DE-U1-202005 013 207
- US-B1- 6 253 584

## Description

The invention relates to a laundry washing machine with an UV source.

### Background Art

The use of laundry washing machines as household appliances is widespread. This is true for laundry washing machines which can only wash and rinse laundry and also for laundry washing-drying machines which can also dry laundry. Within the present application, the term "laundry washing machine" refers to both kinds of washing machines. Also, terms "laundry washing machine", "washing machine" and "washer" are used interchangeably.

Typical laundry washing machines usually comprise an external casing encompassing a washing tub which contains a rotatable perforated drum into which the laundry is placed. Water can usually be channeled into or supplied to the washing tub by a water inlet circuit. A liquid outlet circuit allows to withdraw liquid from the tub and to convey it to the outside. A recirculation circuit allows to withdraw from the tub and to re-admit it into the tub at a similar or different location.

Changes in domestic laundry habits, e.g. washing at low temperatures or the use of detergents free of bleaching agents, ask for new hygiene solutions which become active already at low temperatures and which are able to reproduce known cleaning effects at high temperatures, i.e. > 60° C, and to reproduce the use of bleaches, especially chlorine-based.

Besides hygienic effects, also the disinfection of the laundry has received increased attention and has increasingly become important, especially for baby clothes or laundry washed at low temperatures. To achieve disinfection, laundry disinfection additives are known which are added to the laundry during the washing procedure. Another well-known non-chemical way to disinfect water, air and surfaces is the employment of ultraviolet light sources that predominantly emit UV light in the UV-C frequency range. It is widely used in many industrial and commercial applications, e.g. disinfection of drinking water and wastewater, swimming pools, air purifiers, medical sterilizers, food and drink industries. UV-C light acts by deactivating the DNA of bacteria, viruses and other pathogens, thus destroying their ability to multiply and cause diseases.

The use of UV light sources in laundry washing machines for disinfecting the water used for washing and/or rinsing the laundry is known from the art.

EP 2 314 753 A1 discloses a method for performing a rinse cycle during a washing process in a washing machine. The water is irradiated with ultraviolet light within the recirculation unit of the washing machine and outside the washing tub.

DE 43 42 049 A1 discloses a washing machine with a rotatable drum and a recirculation circuit with a recirculation pump and a flow-type heater and an UV source, the UV source being included into the recirculation circuit. The UV source is preferably inserted into the flow-type heater.

A washing machine with a sterilizing device comprising an ultraviolet lamp is described in US 6,253,584 B1. The UV lamp is accommodated in a lamp casing which is positioned adjacent to a return pipe by which water is returned into an outer tub.

EP 2 221 411 A1 discloses a washing appliance with a casing housing a wash tub, the casing providing an opening by which an UV source can be inserted into and removed from casing.

DE 10 2010 038 692 A1 discloses a dishwasher having a hydraulic circuit including a water diverter in which rinsing liquid is circulated. A UV radiation element is arranged such that UV irradiation of the rinsing liquid takes place within the water diverter, where the UV irradiation element and the water diverter form a common component mountable into the household appliance. The water diverter includes an adjustable switching element operated to control partial flow of the rinsing liquid.

The aim of the present invention is to provide a washing machine with an improved constructional configuration of the UV source.

### Disclosure of Invention

This aim is achieved by the features of claim 1.

Preferred embodiments of the invention are described in relation to the dependent claims and the description in relation to the enclosed drawings.

The present invention is based on the consideration that in order to fulfill modern requirements on disinfection properties of washing machines and/or washing procedures, when using an UV lamp, the appliance of the UV radiation should be as direct and lossless as possible, which can be supported by a close and secure positioning. It would additionally be advantageous use as few as possible extra parts which can be subject to malfunction or damage, leading to a lessening of the sterilization effect.

Applicant has found that by designing the recirculation line or duct in such a way that it can house the UV source, a most direct radiation effect can be achieved without the need of introducing extra parts or components for mounting the UV source. Such a configuration also leads to a robust and stable design and allows a secure and accurate positioning of the UV lamp with respect to the water flowing through the recirculation duct. The UV source in this way is directly integrated into the recirculation duct.

The recirculation line with its integrated seat thus is a single-piece construction fulfilling both functions of a conduit allowing a flow of liquid and allowing a disinfection of this liquid via the UV radiation of the UV lamp.

The term laundry washing machine includes washing machines as such but also combined washing/drying machines that can incorporate both functionalities. Also the terms laundry washing machine and washing machine are used interchangeably. The laundry machine can be designed as a front-loading laundry washing machine as well as a top-loading laundry washing machine.

In the present application saying that a first component is "fluidly separated" from a second component means that a fluid, that is especially water, cannot flow from the first component to the second one or vice versa. On the contrary, saying that a first component is "fluidly connected" to a second component means that a fluid can flow from the first component to the second component and vice versa.

The seat is designed in such a way that the recirculation duct in a housing region forms a laterally extended pocket for housing the UV source. The lateral extension is formed in a direction perpendicular to the direction of flow of liquid through the recirculation duct. By means of this lateral extension, the recirculation duct is laterally enlarged to house the UV source and still allow flow of liquid through the duct or line. The pocket is built or designed in such a way that with the UV source inserted, the flow through the duct is not hindered compared to parts of the duct downstream or upstream of this pocket, leading to continuous flow and avoiding clogging. In this housing region of the duct, the UV source thus provides a limitation or wall for the liquid flowing through the duct.

The recirculation line or duct is advantageously adapted in such a way that the liquid is flowing along said portion of the UV-transparent wall. This design allows direct radiation of the liquid flowing by and leads to an efficient germicidal effect.

The recirculation duct is preferably built as a hose or a pipe. Materials that are especially well suited for the recirculation duct are natural polypropylene or rubber EPDM.

The UV source according to the invention comprises an UV lamp which produces UV-C light. UV light in this frequency range is known to provide effective disinfection effects.

In a preferred embodiment, the UV lamp is designed as a pen light and arranged with its longitudinal axis aligned in parallel to the recirculation duct at a housing region, allowing an irradiation of liquid with UV radiation basically along its full length.

The seat created in the recirculation duct preferably comprises an cylindrical housing with an opening for inserting the UV source and a closing element at said opening for preventing water leakage. The UV source can also have an additional closing element, which while demanding an additional part can further reduce the risk of damaging the UV source due to leakage when replacing the UV source.

The closing element, which can be removed if the UV lamp should be cleaned, repaired or replaced, is advantageously built as a gasket.

The UV lamp according to the invention comprises a housing which is built of quartz, allowing preventing clogging due to washing fluff.

The housing of the UV lamp according to the invention at least partially comprises an inner reflective surface for the UV radiation emitted from the UV source. Due to the reflective surface, UV radiation which is not irradiated directly into the liquid bypassing the UV lamp by flowing through the recirculation duct is - at least partially - reflected back into the liquid, thereby increasing the effectiveness of disinfection.

In one preferred embodiment, the reflective surface has an cylindrical cross section. In another preferred embodiment, the reflective surface has an ellipsoidal or parabolic cross section. The design goal is to provide a reflective surface with maximum possible reflection efficiency maximizing the UV radiation impinging on the bypassing liquid.

For the position of the UV source with respect to the recirculation pump, essentially two different configurations are possible. In a first preferred configuration, the recirculation duct is fluidly connected downstream of the recirculation pump. This means that also the UV source is located or arranged downstream of the recirculation pump and irradiates the liquid after passing through the pump. In another preferred configuration, the recirculation duct and therefore also the UV source is fluidly connected upstream of said recirculation pump, whereby in this case the liquid which is drained from the tub is first passing the UV source and then entering the pump.

The first recirculation region is in a first preferred embodiment located in a bottom part of the washing tub and the second recirculation region is located at a higher part the washing tub. With this configuration the recirculation circuit is preferably activated to improve or enhance wetting of the laundry inside the drum or tub.

In a second preferred embodiment the first recirculation region is located in a bottom part of the washing tub and the second recirculation region is located at a bottom part of the washing tub, whereby an activation of the recirculation circuit is preferably performed for further mixing of the washing liquid.

The advantages of the application are especially a follows. The integration of the UV source into the recirculation duct leads to an improved hygienic performance in low and cold temperature washing. The UV source or UV unit sanitizes the liquid passing by, whereby > 99.0% bacteria reduction in a single pass can be achieved. The washing machine is suitable also for delicate and colored items (e.g. silk, wool) because they are not directly exposed to UV light or irradiation. The washing machine guarantees hygienic washing also when the water source feeding is not guaranteed, for example when the machine uses water sources different from potable tap water (e.g. rain water, reclaimed grey water) or when the machines are fed with tap water which is not free of bacteria. Sanitization of the laundry in cold washing cycles is feasible without using chemicals by a physical method employing a UV-C light source, leading to an improved hygiene performance.

By positioning the UV source within the recirculation duct which is adapted to house the UV source, direct and effective sterilization of the washing liquid is achieved while at the same time a robust positioning of the UV source is possible. The design of the recirculation duct comprising a lateral pocket for insertion of the UV lamp allows a comfortable way of replacing or removing the UV lamp.

### Brief description of the Drawings

Further characteristics and advantages of the present invention will be highlighted in greater detail in the following detailed description of some of its preferred embodiments, provided with reference to the enclosed drawings. In said drawings:
- FIG. 1: shows a perspective view of a laundry washing machine with an UV source according to a first preferred embodiment of the invention;
- FIG. 2: shows the laundry machine of FIG. 1 with the external casing removed and with some parts removed;
- FIG. 3: shows the laundry machine of FIG. 2 from another point of view;
- FIG. 4: shows a partial and enlarged view of some components;
- FIG. 5: shows some components of a recirculation circuit with an UV source;
- FIG. 6: shows the recirculation circuit components of FIG.5 with an explosive view of the UV source;
- FIG. 7: shows a cross section through the UV source in a first embodiment;
- FIG. 8: shows a cross section through the UV source in a second embodiment;
- FIG. 9: shows a perspective view of a laundry washing machine according to a second preferred embodiment of the invention;
- FIG. 10: shows an enlarged view of some components;
- FIG. 11: shows the recirculation circuit components of the washing machine according to FIG. 9;
- FIG. 12: shows another perspective view of the laundry washing machine according to FIG. 9;
- FIG. 13: shows an enlarged view of the embedded UV source;
- FIG. 14: shows a cross section through the UV source;
- FIG. 15: shows a perspective view of a laundry washing machine according to a first preferred embodiment of the invention;
- FIG. 16: shows a different perspective view of the laundry washing machine of FIG. 15;
- FIG. 17: shows an enlarged view of a recirculation circuit of the washing machine of FIG. 16;
- FIG. 18: shows the recirculation circuit components of FIG. 17;
- FIG. 19: shows the recirculation circuit components of FIG. 18 in a different view;
- FIG. 20: shows still another view of the recirculation circuit components.

### Detailed Description of the Invention

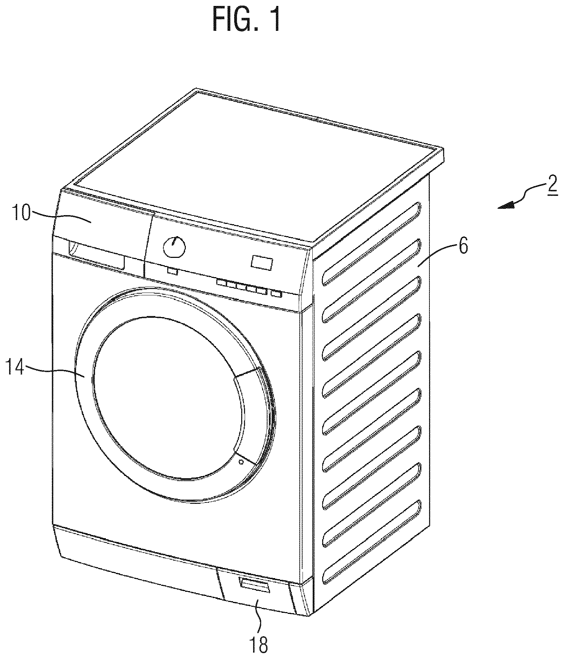

With reference to FIG. 1, a laundry washing machine 2 is shown which comprises a casing or housing 6, a removable drawer 10 provided with at least one compartment suited to be filled with washing and/or rinsing products (detergent, softener, etc.), a loading/unloading door 14 allowing access to a washing drum (not visible) and a removable cover 18.

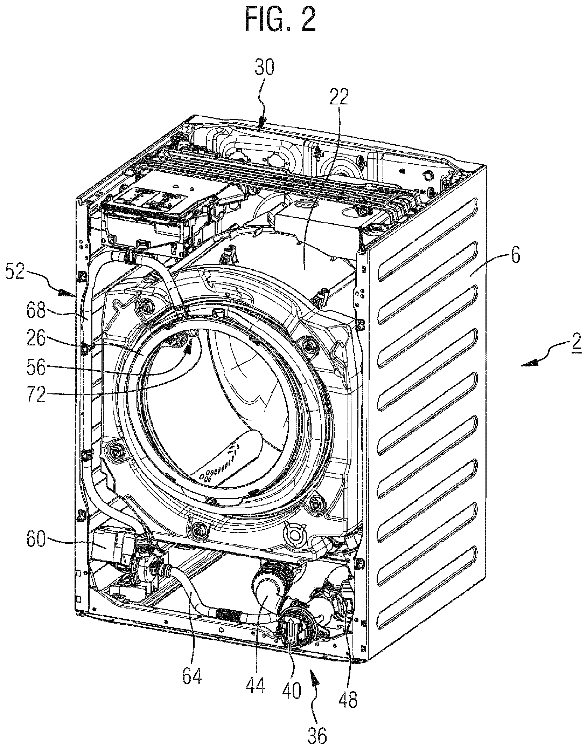

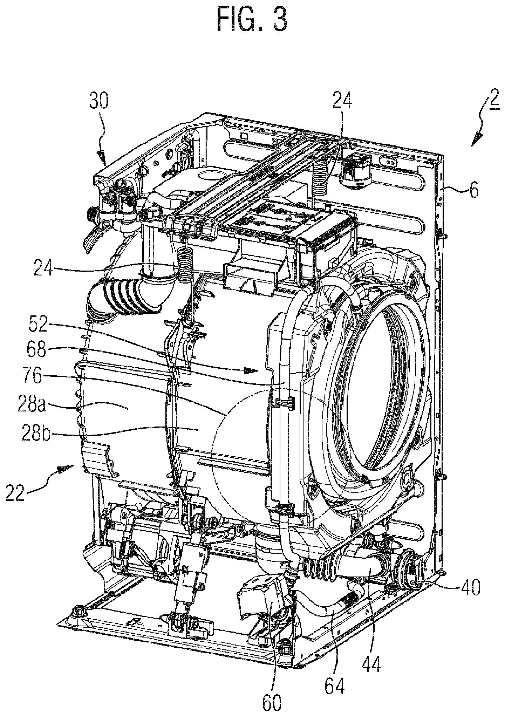

As can be seen in Figs. 2 and 3, a washing tub 22 is provided which contains a rotatable perforated drum. Tub 22 comprises two hemi-shells 28a, 28b structured for reciprocally coupled to form tub 22. Both tub 22 and drum have a substantially cylindrical shape. Tub 22 is suspended in a floating manner inside housing 6 by means of a number of coil springs and shock absorbers 24. The drum is rotated by an electric motor (not shown), which transmits the rotating motion of a motor axle to a shaft of the drum by a belt/pulley system. In a different embodiment of the invention, the motor can be directly associated with the shaft of the drum. Tub 22 is connected to housing 6 by means of an elastic bellows 26, or gasket.

A water supply circuit 30 is arranged in the upper part of the laundry washing machine 2 and is suited to supply water into tub 22. Water supply circuit 30 of a laundry washing machine is well known from the art and therefore will not be described in detail. Preferably, the water is supplied into tub 22 by water supply circuit 30 by making it flow through drawer 10. The water which reaches tub 22, can in this case selectively contain one of the products contained in the at least one compartment of drawer 10, or such water can be clean and in this case it may reach tub 22 directly, bypassing the at least one compartment of drawer 10. In an alternative embodiment of the invention, a further separate water supply pipe can be provided, which exclusively supplies clean or fresh water into tub 22.

Laundry washing machine 2 comprises a water outlet circuit 36 suitable for withdrawing liquid or water from a lower portion of tub 22. Water outlet circuit 36 further comprises a filtering device 40 arranged between a main pipe 44 and a drain pump 48. Filtering device 40 is adapted to retain undesirable bodies present inside tub 22 during the draining of washing/rinsing liquid through water outlet circuit 36. Access to the filtering device 40 is provided by removing removable cover 18.

Main pipe 44 connects the lower portion of tub 22 fluidly to filtering device 40. Activation of drain pump 48 drains liquid, i.e. water or water mixed with washing and/or rinsing products, from tub 22 to the outside of washing machine 2.

Laundry machine 2 comprises a recirculation circuit 52 adapted to drain liquid from the lower portion of tub 22 and to readmit this liquid into an upper region 56 of tub 22. Recirculation circuit 52 comprises a recirculation pump 60, which is built as a jet pump, a pipe 64 connecting filtering device 40 to recirculation pump 60 and a recirculation pipe 68, preferably with a terminal nozzle 72 arranged at upper region 56 of tub 22. The liquid from the lower portion of tub 22 is conveyed towards the upper region 56 of tub 22 by activating recirculation pump 60. Recirculation circuit 52 is advantageously activated in order to improve wetting of the laundry inside the drum.

Laundry washing machine 2 is designed to provide effective and reliable water disinfection functionality by employing a UV source with an improved positioning with respect to the liquid to be disinfected.

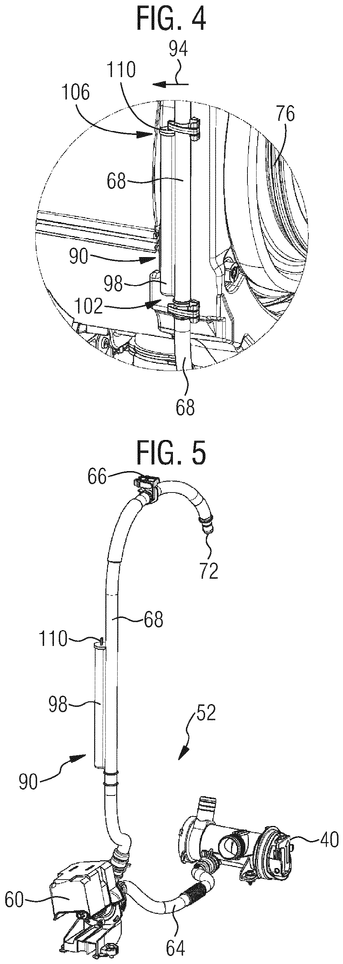

Fig. 4 displays a magnified view of parts of laundry washing machine 2 inside a circle 76 in FIG. 3. In a housing region 90, recirculation pipe 68 or recirculation duct is extended in a lateral direction 94 to form a seat 98 for housing a UV source. Recirculation pipe 68 forming seat 98, which is built as a laterally extending pocket, is structured in such a way that when an UV source is inserted into seat 98, it is in direct contact with water flowing through recirculation pipe 68. In other words, water is flowing at least partially against or along the inserted UV source in direct contact.

Since recirculation pipe 68 is built to laterally house or include the UV lamp, recirculation pipe 68 has to be sealed against water leakage. At a bottom part 102, the pocket is closed by means of the material. At a top part 106, the UV lamp can be inserted, and after insertion, a gasket 110 is plugged into pocket 98. Recirculation pipe 68 can be connected to casing or housing 6 and/or other parts of washing machine by clamps 66.

In the embodiment shown in FIGs. 1-4, seat 98 and hence also UV source is positioned downstream of recirculation pump 60. When recirculation pump 60 is activated, water is drained from the lower part of tub 22, flowing through recirculation pump 60 from where it is pumped through recirculation pipe 68, passing the UV source. After being irradiated by UV radiation, it is entering again tub 22 in upper region 56.

In FIG. 5, recirculation circuit 52 is displayed extracted from washing machine 2.

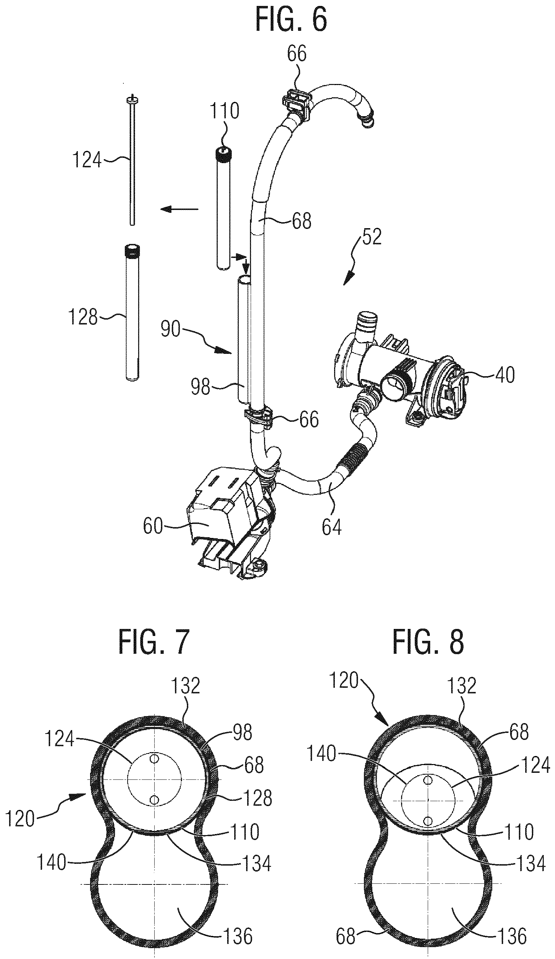

In FIG. 6, recirculation circuit 52 of FIG. 5 is shown in an exploded view with UV source 120 removed from pocket 98. UV source 120 comprises an UV lamp 124 and a lamp housing 128 made essentially of quartz, in which UV lamp 124 is inserted. UV lamp 124 in the present embodiment is designed as a pen light.

In FIG. 7, a cross section of recirculation pipe 68 in housing region 90 is displayed. Recirculation pipe 68 comprises a sheath or casing 132 made of plastic which has a cross section resembling two connected circles or the outer contour of the Arabic number "8". Water is flowing through a flow region 136 when recirculation pump 60 is activated. Flow region 136 is fluidly connected to parts of recirculation pipe 68 that form seat 98. Seat 98 structured in casing 132 houses or contains lamp housing 128 which contains UV lamp 124. Lamp housing 128 in its interior comprises a reflective surface 140 made of aluminum which is painted or applied as a film inside the lamp housing 128 made of quartz, whereby reflective is meant with respect to the UV radiation of UV lamp 124, which essentially lies in the UV-C range. Lamp housing 128 also comprises a UV-transparent wall 134 which allows UV radiation produced by UV lamp 124 to enter flow region 136 without or with only minimal attenuation. This design allows an optimized efficiency of the UV radiation since UV radiation that is emitted into the direction of the flow region 136 is directly applied to the liquid, while radiation emitted in other directions is reflected back into flow region 136 by reflective surface 140. Thus, due to the reflective surface, UV radiation emitted from UV lamp 124 away from flowing region 136 is, at least partially, reflected back into flowing region 126, increasing efficiency and effectiveness of the sterilization procedure.

The non-chemical approach to disinfection using UV-C light is a well-known disinfection treatment for drinking water and wastewater, widely used and positively perceived by consumers (swimming pools, air purifiers, medical sterilizers). UV-C light (wavelength 264 nm) is germicidal and deactivates the DNA of bacteria, viruses and other pathogens and thus destroys their ability to multiply and cause disease. Direct irradiation if them is necessary to deliver this effect.

In FIG. 8, UV source 120 is shown with an alternative configuration of reflective surface 140. While reflective surface 140 of UV source 120 according to FIG. 7 has an essentially circular cross section, reflective surface of UV source 120 according to FIG. 8 has an essentially ellipsoidal cross section.

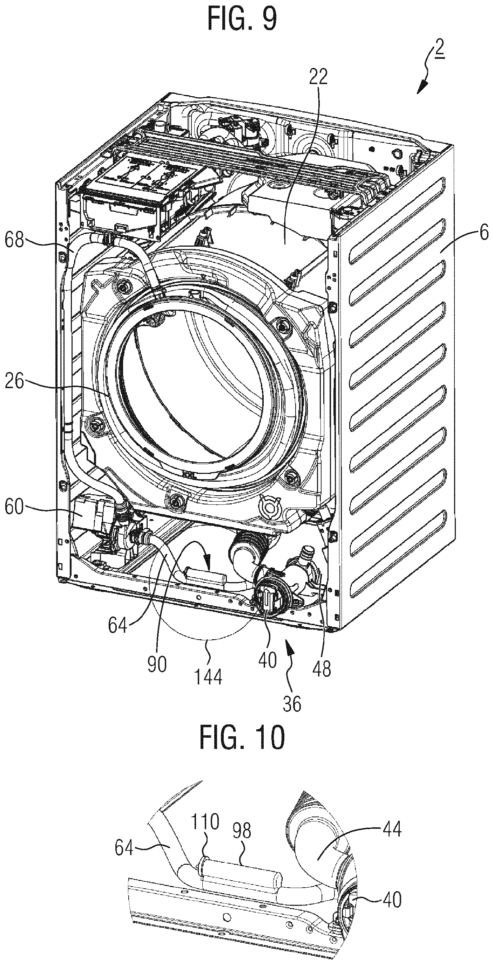

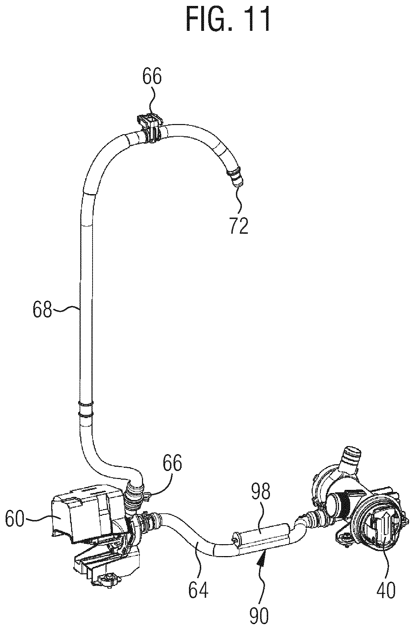

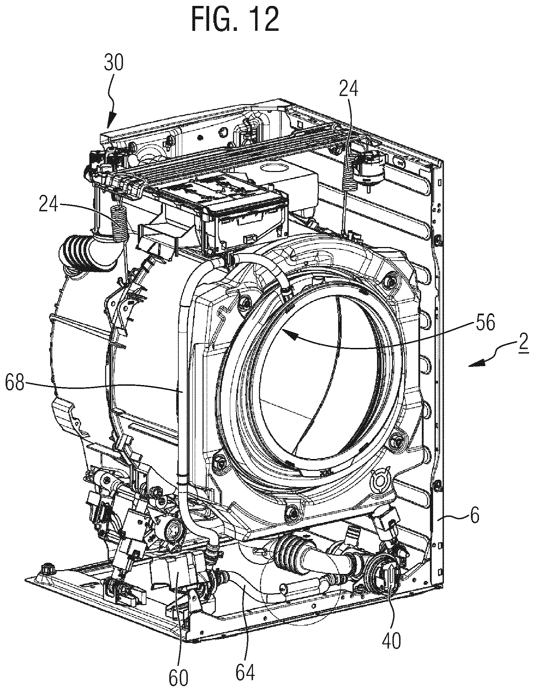

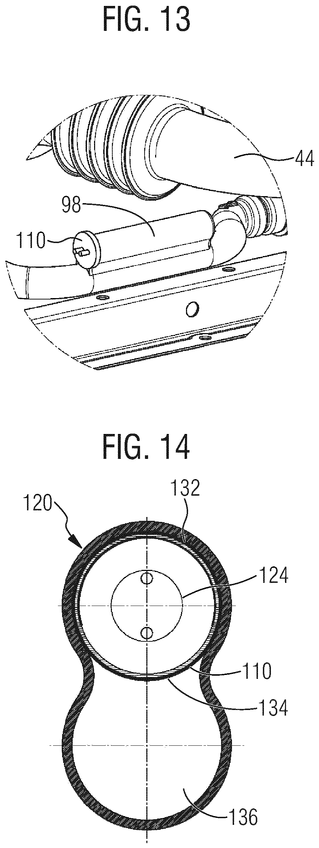

A laundry washing machine 2 in a second preferred embodiment of the invention is displayed in FIG. 9. Laundry washing machine 2 according to FIG. 9 differs from laundry washing machine 2 according to FIG. 2 in the positioning of UV source 120 with respect to or in relation to recirculation pump 60. In the present embodiment of FIG. 9, UV source 120 is positioned upstream of recirculation pump 60 in pipe 64. A circle 144 is displayed in a magnified view in FIG. 10. UV source 120 is essentially horizontally aligned. FIGs. 11, 12, 13, and 14 show different illustrations of the components.

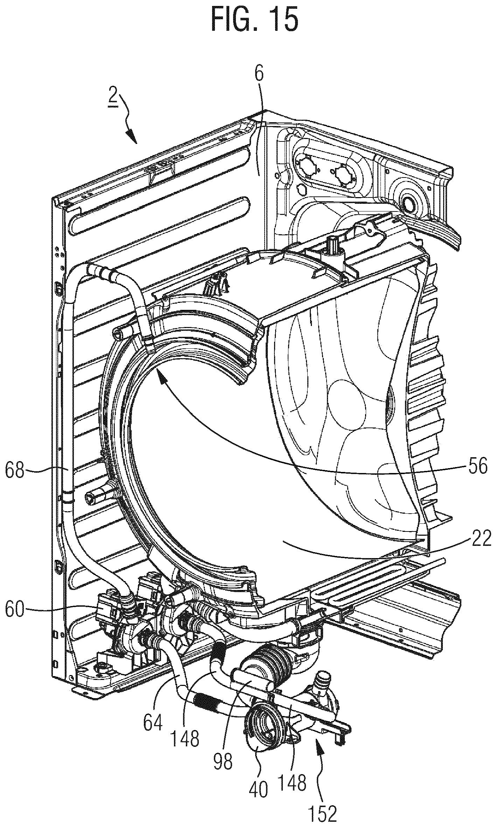

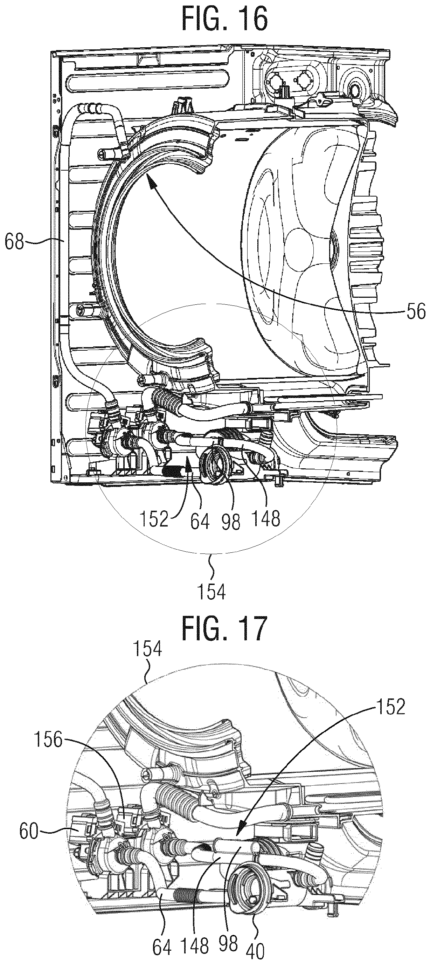

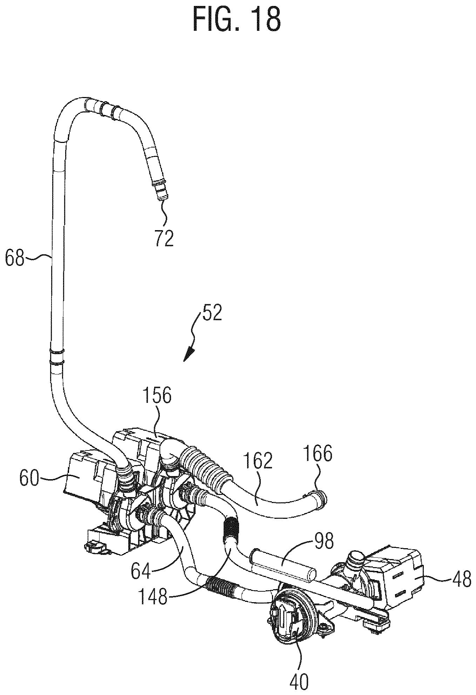

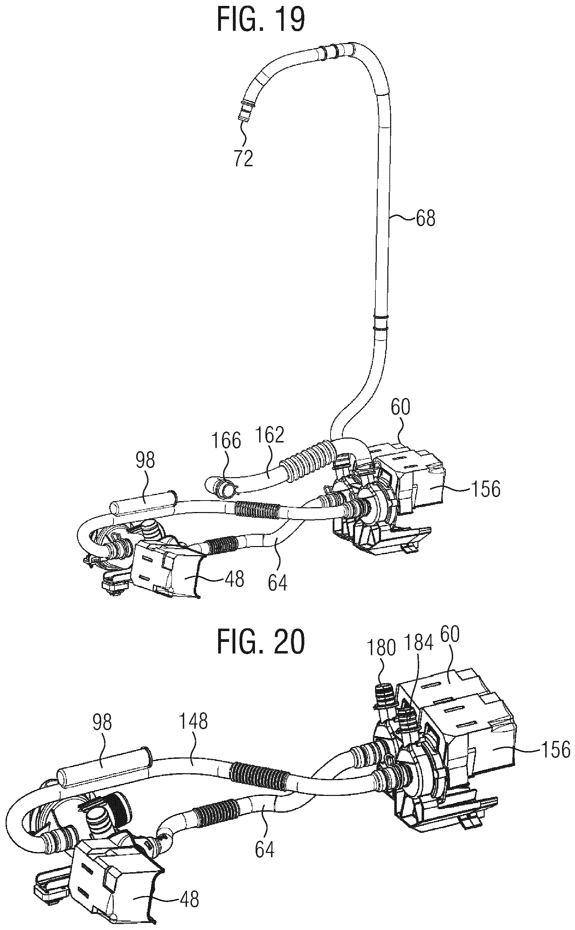

A laundry washing machine 2 in still another preferred embodiment of the invention is shown in FIGs. 15 and 16. In the embodiment shown, seat 98 is formed in a recirculation pipe 148 which is part of a second recirculation circuit 152. The components within a circle 154 are shown in an enlarged view in FIG. 17. Recirculation circuit 152 comprises a second recirculation pump 156 which is built as a mix pump. Seat 98 which contains an UV lamp is part of recirculation pipe 148 and positioned upstream with respect to second recirculation pump 156. Second recirculation circuit 152 is adapted to drain liquid from a lower part or portion of tub 22 and to red-admit such liquid (recirculating mixing liquid) into another or essentially the same lower portion of tub 22. This transport of liquid is achieved by activating recirculation pump 156. Second recirculation circuit 152 is advantageously activated when a further mixing and/or dissolution of the washing products is needed. As can be seen in FIGs 18-20, which show, among other components, some components of second recirculation circuit 152 extracted from washing machine 2, a recirculation pipe 162 with a terminal portion 166 is fluidly connected downstream to second recirculation pump 156. Terminal portion 166 advantageously ends in the lower portion of tub 22. In Fig. 20, two outlets 180, 184 are shown. Outlet 180 of recirculation pump 60 serves to connect recirculation pipe 68; outlet 184 of recirculation pump 156 serves to connect recirculation pipe 162.

UV lamp 124 can be activated for killing organic matter during various cycles of the washing routine. It can for example, be activated during several intervals or continuously during a night cycle which involves operation of the washing machine for several hours and wherein laundry remains soaked for a long time.

The invention comprises both front-loading as well as top-loading machines with a drum rotating around a horizontal axis. It also comprises washing machines with a vertically positioned drum which is rotating around a vertical axis. These washing machines can be built as top-loading washing machines. The drum can be held stationary or fixed during the washing cycle; it is put into rotation around its vertical axis during the spinning cycle.

### List of reference numerals

- 2: washing machine
- 6: housing
- 10: drawer
- 14: door
- 18: cover
- 22: tub
- 24: shock absorber
- 26: bellows
- 28a: hemi-shell
- 28b: hemi-shell
- 30: supply circuit
- 36: outlet circuit
- 40: filtering device
- 44: main pipe
- 48: drain pump
- 52: recirculation circuit
- 56: upper region
- 60: recirculation pump
- 64: pipe
- 66: clamp
- 68: recirculation pipe
- 72: nozzle
- 76: circle
- 90: housing region
- 94: lateral direction
- 98: seat
- 102: bottom part
- 106: top part
- 110: gasket
- 120: UV source
- 124: UV lamp
- 128: lamp housing
- 132: casing
- 134: UV-transparent wall
- 136: flow region
- 140: reflective surface
- 144: circle
- 148: recirculation pipe
- 152: recirculation circuit
- 154: circle
- 156: recirculation pump
- 162: recirculation pipe
- 166: terminal portion
- 180: outlet
- 184: outlet

## Claims

1. Laundry washing machine (2), comprising:
- a washing tub (22) external to a rotatable washing drum adapted to receive laundry;
- a recirculation circuit (52), suitable for withdrawing liquid from a first recirculation region of said washing tub (22) and for re-admitting such a liquid into a second recirculation region of said washing tub (22), said recirculation circuit (52) comprising a recirculation pump (60, 156) suitable for forcing liquid inside said recirculation circuit (52) comprising at least one recirculation duct (64, 68, 148, 162) for transporting liquid;
- an UV source (120) within said recirculating circuit (52);
wherein said recirculation duct (64, 68, 148, 162) comprises a conduit for the liquid to flow and a seat (98) for receiving said UV source (120) including a UV-transparent wall (134), wherein a portion of the UV-transparent wall (134) separates said seat (98) from the conduit,
wherein said seat is designed in such a way that the recirculation duct in its housing region forms a laterally extended pocket for housing the UV source, the lateral extension is formed in a direction perpendicular to the direction of flow of liquid through the recirculation duct, by means of this lateral extension said recirculation duct being laterally enlarged to house said UV source and still allowing flow of liquid through said recirculation duct,
**characterized in that**
said pocket is built or designed in such a way that with the UV source inserted,
the flow through said duct is not hindered compared to parts of said duct downstream or upstream of this pocket, leading to continuous flow and avoiding clogging, in said housing region of said duct, whereby said UV source (120) comprises an UV lamp (124) which produces UV-C light, and whereby said UV lamp (124) comprises a housing (128) which is built of quartz, and
whereby said housing (128) at least partially comprises an inner reflective surface (140) for the UV radiation emitted from said UV lamp (124).

2. Washing machine (2) according to claim 1, wherein said recirculation duct (64, 68, 148, 162) is adapted in such a way that the liquid is flowing along said portion of the UV-transparent wall (134).

3. Washing machine (2) according to claim 1 or 2, whereby said recirculation duct (64, 68, 148, 162) is built as a hose.

4. Washing machine (2) according to one of the claims 1 to 3, whereby said UV lamp (124) is designed as a pen light and arranged with its longitudinal axis aligned in parallel to the recirculation duct (64, 68, 148, 162) at a housing region (90).

5. Washing machine (2) according to one of the claims 1 to 4, whereby said seat (98) comprises a cylindrical housing with an opening for inserting said UV source (130) and a closing element (110) at said opening for preventing water leakage.

6. Washing machine (2) according to one of the claims 1 to 5, whereby said reflective surface (140) has a cylindrical cross section.

7. Washing machine (2) according to one of the claims 1 to 5, whereby said reflective surface (140) has an ellipsoidal cross section.

8. Washing machine (2) according to one of the claims 1 to 7, whereby said recirculation duct (68) is fluidly connected downstream of said recirculation pump (60).

9. Washing machine (2) according to one of the claims 1 to 7, whereby said recirculation duct (148) is fluidly connected upstream of said recirculation pump (60).

10. Washing machine (2) according to one of the claims 1 to 9 whereby said first recirculation region is located in a bottom part of said washing tub (22) and said second recirculation region is located at a higher part of said washing tub (22).

11. Washing machine (2) according to one of the claims 1 to 9, whereby said first recirculation region is located in a bottom part of said washing tub (22) and said second recirculation region is located at a bottom part of said washing tub (22).

12. Washing machine (2) according to one of the claims 1 to 11, whereby said recirculation duct (64, 68 148) is at least partially made of natural polypropylene.

## Patentansprüche

1. Waschmaschine (2), umfassend:
- eine Waschwanne (22) außerhalb einer drehbaren Waschtrommel, die eingerichtet ist, um Wäsche aufzunehmen;
- einen Umwälzkreislauf (52), der geeignet ist, um Flüssigkeit aus einer ersten Umwälzregion der Waschwanne (22) abzuziehen und eine derartige Flüssigkeit in eine zweite Umwälzregion der Waschwanne (22) wieder zuzugeben, wobei der Umwälzkreislauf (52) eine Umwälzpumpe (60, 156) umfasst, die geeignet ist, um Transportieren von Flüssigkeit innerhalb des Umwälzkreislaufs (52), der mindestens eine Umwälzrohrleitung (64, 68, 148, 162) umfasst, durchzusetzen;
- eine UV-Quelle (120) innerhalb des Umwälzkreislaufs (52) ;
wobei die Umwälzrohrleitung (64, 68, 148, 162) eine Leitung, in der die Flüssigkeit fließen kann, und einen Sitz (98) zum Aufnehmen der UV-Quelle (120) einschließlich einer UV-transparenten Wand (134) umfasst, wobei ein Abschnitt der UV-transparenten Wand (134) den Sitz (98) von der Leitung trennt,
wobei der Sitz in einer solchen Weise konzipiert ist, dass die Umwälzrohrleitung in ihrer Gehäuseregion eine sich seitlich erstreckende Tasche bildet, um die UV-Quelle unterzubringen, wobei die seitliche Erweiterung in einer Richtung senkrecht zu der Flussrichtung der Flüssigkeit durch die Umwälzrohrleitung hindurch gebildet ist, wobei mittels dieser seitlichen Erweiterung die Umwälzrohrleitung seitlich vergrößert ist, um die UV-Quelle unterzubringen und dennoch den Fluss von Flüssigkeit durch die Umwälzrohrleitung zuzulassen,
**dadurch gekennzeichnet, dass**
die Tasche in einer solchen Weise gebaut oder konzipiert ist, dass der Fluss durch die Rohrleitung hindurch bei eingesetzter UV-Quelle verglichen mit Teilen dieser Rohrleitung stromabwärts oder stromaufwärts zu dieser Tasche nicht behindert wird, was zu kontinuierlichem Fluss in der Gehäuseregion der Rohrleitung führt und Verstopfen derselben vermeidet, wobei die UV-Quelle (120) eine UV-Lampe (124) umfasst, die UV-C-Licht erzeugt, und wobei die UV-Lampe (124) ein Gehäuse (128) umfasst, das aus Quarz gebaut ist, und wobei das Gehäuse (128) mindestens teilweise eine innere reflektierende Oberfläche (140) für die aus der UV-Lampe (124) emittierte UV-Strahlung umfasst.

2. Waschmaschine (2) nach Anspruch 1, wobei die Umwälzrohrleitung (64, 68, 148, 162) in einer solchen Weise eingerichtet ist, dass die Flüssigkeit an dem Abschnitt der UV-transparenten Wand (134) fließt.

3. Waschmaschine (2) nach Anspruch 1 oder 2, wobei die Umwälzrohrleitung (64, 68, 148, 162) als Schlauch gebaut ist.

4. Waschmaschine (2) nach einem der Ansprüche 1 bis 3, wobei die UV-Lampe (124) als Lichtstift konzipiert ist und mit ihrer Längsachse parallel zu der Umwälzrohrleitung (64, 68, 148, 162) an einer Gehäuseregion (90) ausgerichtet ist.

5. Waschmaschine (2) nach einem der Ansprüche 1 bis 4, wobei der Sitz (98) ein zylindrisches Gehäuse mit einer Öffnung zum Einsetzen der UV-Quelle (130) und ein Verschlusselement (110) an der Öffnung umfasst, um Wasserleckage zu verhindern.

6. Waschmaschine (2) nach einem der Ansprüche 1 bis 5, wobei die reflektierende Oberfläche (140) einen zylindrischen Querschnitt aufweist.

7. Waschmaschine (2) nach einem der Ansprüche 1 bis 5, wobei die reflektierende Oberfläche (140) einen elliptischen Querschnitt aufweist.

8. Waschmaschine (2) nach einem der Ansprüche 1 bis 7, wobei die Umwälzrohrleitung (68) fließtechnisch stromabwärts der Umwälzpumpe (60) verbunden ist.

9. Waschmaschine (2) nach einem der Ansprüche 1 bis 7, wobei die Umwälzrohrleitung (148) fließtechnisch stromaufwärts der Umwälzpumpe (60) verbunden ist.

10. Waschmaschine (2) nach einem der Ansprüche 1 bis 9, wobei die erste Umwälzregion sich in einem Bodenteil der Waschwanne (22) befindet und die zweite Umwälzregion sich in einem höheren Teil der Waschwanne (22) befindet.

11. Waschmaschine (2) nach einem der Ansprüche 1 bis 9, wobei die erste Umwälzregion sich in einem Bodenteil der Waschwanne (22) befindet und die zweite Umwälzregion sich in einem Bodenteil der Waschwanne (22) befindet.

12. Waschmaschine (2) nach einem der Ansprüche 1 bis 11, wobei die Umwälzrohrleitung (64, 68, 148) mindestens teilweise aus natürlichem Polypropylen gefertigt ist.

## Revendications

1. Machine à laver le linge (2), comprenant :
- une cuve de lavage (22) externe à un tambour de lavage rotatif adapté pour recevoir du linge ;
- un circuit de recirculation (52), approprié pour retirer un liquide à partir d'une première région de recirculation de ladite cuve de lavage (22) et pour réadmettre un tel liquide dans une seconde région de recirculation de ladite cuve de lavage (22), ledit circuit de recirculation (52) comprenant une pompe de recirculation (60, 156) appropriée pour forcer un liquide à l'intérieur dudit circuit de recirculation (52) comprenant au moins une canalisation de recirculation (64, 68, 148, 162) pour transporter le liquide ;
- une source UV (120) à l'intérieur dudit circuit de recirculation (52) ;
dans laquelle ladite canalisation de recirculation (64, 68, 148, 162) comprend un conduit pour l'écoulement du liquide et un siège (98) pour recevoir ladite source UV (120) incluant une paroi transparente aux UV (134), dans laquelle une portion de la paroi transparente aux UV (134) sépare ledit siège (98) du conduit,
dans laquelle ledit siège est conçu de manière telle que la canalisation de recirculation, dans sa région de logement, forme une poche latéralement étendue pour loger la source UV, l'extension latérale est formée dans une direction perpendiculaires à la direction d'écoulement de liquide à travers la canalisation de recirculation, au moyen de cette extension latérale ladite canalisation de recirculation étant latéralement agrandie pour loger ladite source UV et toujours permettre un écoulement de liquide à travers ladite canalisation de recirculation,
**caractérisée en ce que**
ladite poche est construite ou conçue de manière telle que, avec la source UV insérée, l'écoulement à travers ladite conduite n'est pas entravé par rapport à des parties de ladite conduite en aval ou en amont de cette poche, entraînant un écoulement continu et évitant le colmatage, dans ladite région de logement de ladite conduite, moyennant quoi ladite source UV (120) comprend une lampe UV (124) qui produit de la lumière UV-C, et moyennant quoi ladite lampe UV (124) comprend un logement (128) qui est construit de quartz, et moyennant quoi ledit logement (128) comprend au moins partiellement une surface réfléchissante intérieure (140) pour le rayonnement UV émis à partir de ladite lampe UV (124).

2. Machine à laver (2) selon la revendication 1, dans laquelle ladite canalisation de recirculation (64, 68, 148, 162) est adaptée de manière telle que le liquide s'écoule le long de ladite portion de la paroi transparente aux UV (134).

3. Machine à laver (2) selon la revendication 1 ou 2, moyennant quoi ladite canalisation de recirculation (64, 68, 148, 162) est construite sous forme de tuyau flexible.

4. Machine à laver (2) selon l'une des revendications 1 à 3, moyennant quoi ladite lampe UV (124) est conçue sous forme de lumière en forme de stylo et agencée avec son axe longitudinal aligné en parallèle à la canalisation de recirculation (64, 68, 148, 162) dans une région de logement (90).

5. Machine à laver (2) selon l'une des revendications 1 à 4, moyennant quoi ledit siège (98) comprend un logement cylindrique avec une ouverture pour insérer ladite source UV (130) et un élément de fermeture (110) au niveau de ladite ouverture pour empêcher les fuites d'eau.

6. Machine à laver (2) selon l'une des revendications 1 à 5, moyennant quoi ladite surface réfléchissante (140) a une section cylindrique transversale.

7. Machine à laver (2) selon l'une des revendications 1 à 5, moyennant quoi ladite surface réfléchissante (140) a une section transversale ellipsoïde.

8. Machine à laver (2) selon l'une des revendications 1 à 7, moyennant quoi ladite canalisation de recirculation (68) est fluidiquement raccordée en aval de ladite pompe de recirculation (60).

9. Machine à laver (2) selon l'une des revendications 1 à 7, moyennant quoi ladite canalisation de recirculation (148) est fluidiquement raccordée en amont de ladite pompe de recirculation (60).

10. Machine à laver (2) selon l'une des revendications 1 à 9, moyennant quoi ladite première région de recirculation est située dans une partie inférieure de ladite cuve de lavage (22) et ladite seconde région de recirculation est située dans une partie plus haute de ladite cuve de lavage (22).

11. Machine à laver (2) selon l'une des revendications 1 à 9, moyennant quoi ladite première région de recirculation est située dans une partie inférieure de ladite cuve de lavage (22) et ladite seconde région de recirculation est située dans une partie inférieure de ladite cuve de lavage (22).

12. Machine à laver (2) selon l'une des revendications 1 à 11, moyennant quoi ladite canalisation de recirculation (64, 68 148) est au moins partiellement faite de polypropylène naturel.
